# EUROPÄISCHE PATENTSCHRIFT

(11) **EP 0 968 938 B1**
(45) Veröffentlichungstag und Bekanntmachung des Hinweises auf die Patenterteilung: **11.12.2002**
(21) Anmeldenummer: 99109580.3
(22) Anmeldetag: 14.05.1999
(51) Int. Cl.: B65G 1/08

(54) **Durchlaufregal zum Kommissionieren von Lagereinheiten**
Gravity feed rack for orderpicking from storage units
Etagère inclinée pour la préparation de commandes à partir des unités de stockage

(30) Priorität: 01.07.1998 DE 19829258
(43) Veröffentlichungstag der Anmeldung: 05.01.2000
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard, Dipl.-Ing.

(56) Entgegenhaltungen:
- DE-A- 3 037 634
- DE-A- 3 716 503
- DE-U- 29 711 710

## Beschreibung

Die Erfindung betrifft ein Durchlaufregal zum Kommissionieren von Lagereinheiten, insbesondere an einem Wechselplatz, mit vorzugsweise in mehreren Ebenen übereinander angeordneten und zur Kommissionierseite hin geneigten, im Abstand parallel zueinander verlaufenden Laufbahnen, auf denen die Lagereinheiten unter Schwerkrafteinfluß von der Beschickungsseite direkt in eine Entnahmeposition gelangen, und mindestens einer den Laufbahnen zugeordneten richtungsabhängigen, um eine ortsfeste Drehachse in gegensinnigen Richtungen verschwenkbaren Durchlaufsperre, durch die die Lagereinheit in einer der Entnhameposition in Bewegungsrichtung vorgelagerten Position festlegbar ist, wobei die Durchlaufsperre als integrierter Bestandteil der Laufbahn in deren im Querschnitt im wesentlichen U-förmigen Laufbahnleiste angeordnet ist und aus einem Schwenkkulissensegment sowie einem Rücklaufsperrglied besteht, die über ein Kopplungsglied miteinander verbunden sind. Ein diese Merkmale aufweisendes Durchlaufregal ist aus der DE-A-3037634 bekannt.

Um das Festhalten einer Lagereinheit, z.B. ein Behälter oder Kasten, in der Warteposition unabhängig von einer zusätzlichen manuellen Betätigung einer Sperrvorrichtung durch eine Bedienungsperson zu machen, ist es für ein Durchlaufregal durch das DE 297 117 10 U1 weiterhin bekanntgeworden, in zumindest einer der beiden komplementären, als Rollen- bzw. Röllchenbahnen ausgebildeten Laufbahnen eine selbsttätige Sperre vorzusehen. Diese ist seitlich der Laufbahn mit vertikaler Drehachse angelenkt und wird von einem um diese ortsfeste Drehachse verschwenkbaren Winkel gebildet, der mittels mindestens einer Feder in einer Grundstellung gehalten wird, aus der heraus er in gegensinnigen Schwenkrichtungen entgegen der Kraft der Feder verschwenkbar ist. Die federbelastete Sperre erlaubt ein Bewegen einer Lagereinheit von der Beschickungsseite direkt in die Entnahmeposition, und nach dem Kommissionieren wird deren Zurückbewegung bzw. -schieben in die Entnahmeposition über die Position der Sperre hinaus verhindert, weil die Sperre nach dem Passieren der Lagereinheit wieder zurückschnellt und eine Kante der Lagereinheit der Schenkel der Winkelsperre einklemmt. Zur Sicherung der vorgelagerten Position der Lagereinheit ist ein diese Position begrenzender, zusätzlicher Anschlag erforderlich, der ebenfalls federbetätigt ist. Hierbei ist problematisch, daß bei durch häufigen Gebrauch nachlassender Federkraft die Sperr- und Lagepositionierung nicht mehr gewährleistet werden kann; abgesehen davon erfordern diese Winkelsperren einen zusätzlichen Platz jeweils an den Außenseiten der Laufbahnen.

Der Erfindung liegt die Aufgabe zugrunde, bei einem Durchlaufregal der eingangs genannten Art die Durchlausperre einfacher und funktionssicherer zu gestalten.

Diese Aufgabe wird erfindungsgemäß dadurch gelöst, daß das Kopplungsglied als ein Drahtbügel ausgebildet ist, der mit an seinem freien Ende abgewinkelten, einander zugewandten Stegen beidseitig in das Rücklaufsperrglied eingerastet und mit seinem geschlossenen Bügelende in einem kurvenförmigen Schlitz des Schwenkkulissensegments geführt ist. Beim Zurückschieben der kommissionierten Lagereinheit zur Beschickungsseite hin, wobei die Lagereinheit zunächst auf das Rücklaufsperrglied auftritt und dieses niederdrückt, kann sich der Drahtbügel frei in dem Schlitz des Schwenkkulissensegments bewegen, und nach dem Überfahren des Rücklaufsperrgliedes verschwenkt dieses sofort zurück in die Ausgangslage, in der es sich an die Stirnseite der Lagereinheit anlegt und deren Zurücklaufen zur Entnahmeseite verhindert.

Eine bevorzugte Ausführung der Erfindung sieht vor, daß das Schwenkkulisensegment und das Rücklaufsperrglied jeweils oberhalb ihres Schwerpunktes auf durch die Seitenwände der Laufbahnleisten gesteckten Achsen freibeweglich gelagert sind und im unbelasteten Zustand über die Laufbahnebene vorkragen. Der hohe Lagerpunkt ermöglicht es ohne weitere unterstützende Maßnahme, daß die beiden Elemente der Durchlaufsperre einerseits im unbelasteten Zustand über die Laufbahnebene nach oben vorstehen und im Anschluß an eine Belastung allein durch ihr Gewicht selbsttätig wieder in diese Ausgangslage zurückschwenken.

Wenn vorzugsweise das Rücklaufsperrglied mit einer sich im unbelasteten Zustand auf dem Leistenboden abstützenden Anschlagkante ausgebildet ist, hält das Gewicht der anliegenden Lagereinheit das Rücklaufsperrglied sicher in dieser Sperrposition, denn ein Durchschwenken ist wegen des Anschlagkontaktes mit dem Leistenboden nicht möglich. Sobald dann die kommissionierte Lagereinheit von einem Regalbediengerät entnommen und ausgelagert worden ist, verschwenkt dann auch das Schwenkkulissensegment selbsttätig in seine Ausgangslage.

Es wird vorgeschlagen, daß das Schwenkkulissensegment und das Rücklaufsperrglied einen im wesentlichen U-förmigen Querschnitt besitzen. Diese Sperrelemente lassen sich damit in einfacher Weise durch Abkanten aus einem Blechzuschnitt oder alternativ als Kunststoffelement oder dergleichen herstellen.

Weitere Merkmale und Vorteile der Erfindung ergeben sich aus den Patentansprüchen und der nachfolgenden Beschreibung, in der ein Ausführungsbeispiel des Gegenstandes der Erfindung näher erläutert ist. Es zeigen:
- Figur 1: als Einzelheit eines Durchlaufregals einen Leistenabschnitt einer Laufbahn mit darin in der Grundstellung angeordneter Durchlaufsperre, im Längsschnitt dargestellt;
- Figur 2: die Laufbahnansicht gemäß Figur 1 mit auf die Durchlaufsperre aufgelaufener Lagereinheit;
- Figur 3: die Laufbahnansicht gemäß Figur 1 beim Zurückbewegen der kommissionierten Lagereinheit im Zeitpunkt nach dem Auflaufen auf ein erstes Element der Durchlaufsperre;
- Figur 4: die Laufbahnansicht gemäß Figur 3 mit demgegenüber über beide Elemente der Durchlaufsperre zurückbewegter Lagereinheit;
- Figur 5: die Laufbahnansicht gemäß Figur 4 mit über das erste Element der Durchlaufsperre hinweg zurückbewegter Lagereinheit;
- Figur 6: einen Schnitt entlang der Linie VI -VI von Figur 4;
- Figur 7: das zweite Element (Schwenkkulissensegment) der Durchlaufsperre als Zuschnitt sowie nach dem Abkanten in der Seiten-, der Vorder- und der Draufsicht;
- Figur 8: das erste Element (Rücklaufsperrglied) der Durchlaufsperre als Zuschnitt sowie nach dem Abkanten in der Seiten- und der Vorderansicht; und
- Figur 9: als Einzelheit der Durchlaufsperre das als Drahtbügel ausgebildete Kopplungsglied in der Gesamtansicht.

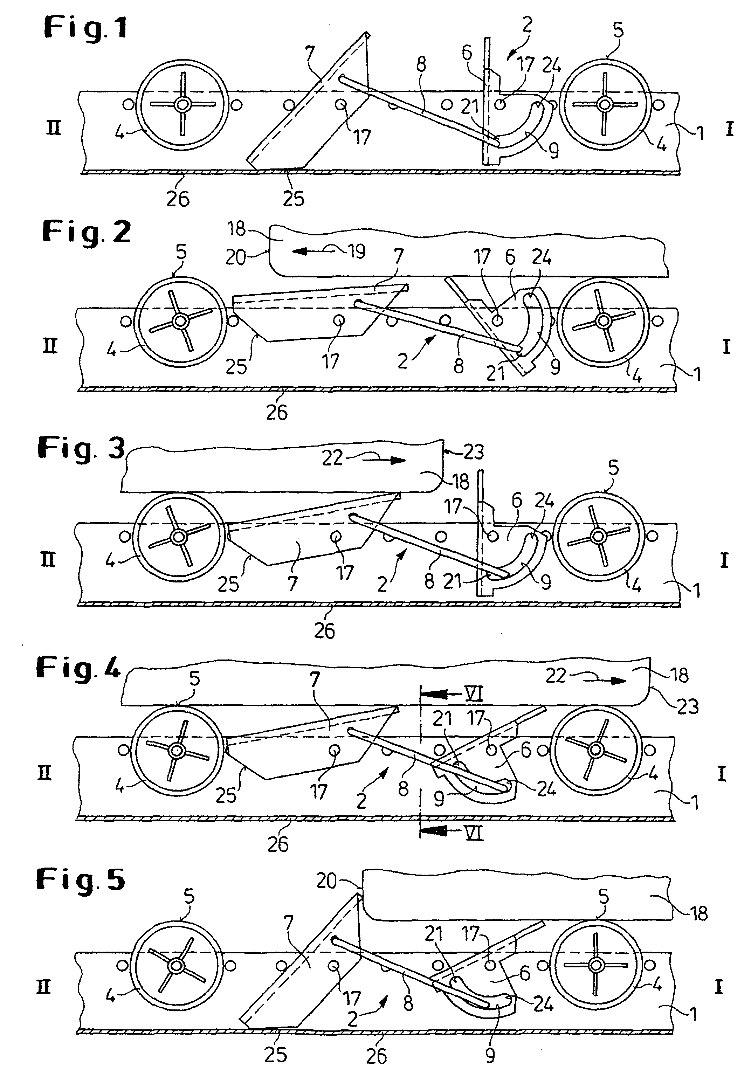

Von einem als solches hinlänglich bekannten Durchlaufregal (vgl. das eingangs genannte DE 297 117 10 U1) ist in den Figuren 1 bis 6 als Einzelheit jeweils lediglich ein Abschnitt von einer der beiden im Abstand parallel zueinander verlaufenden Laufbahnen 1 gezeigt, und zwar in seinem mit einer Durchlausperre 2 ausgebildeten Laufbahnleistenbereich.

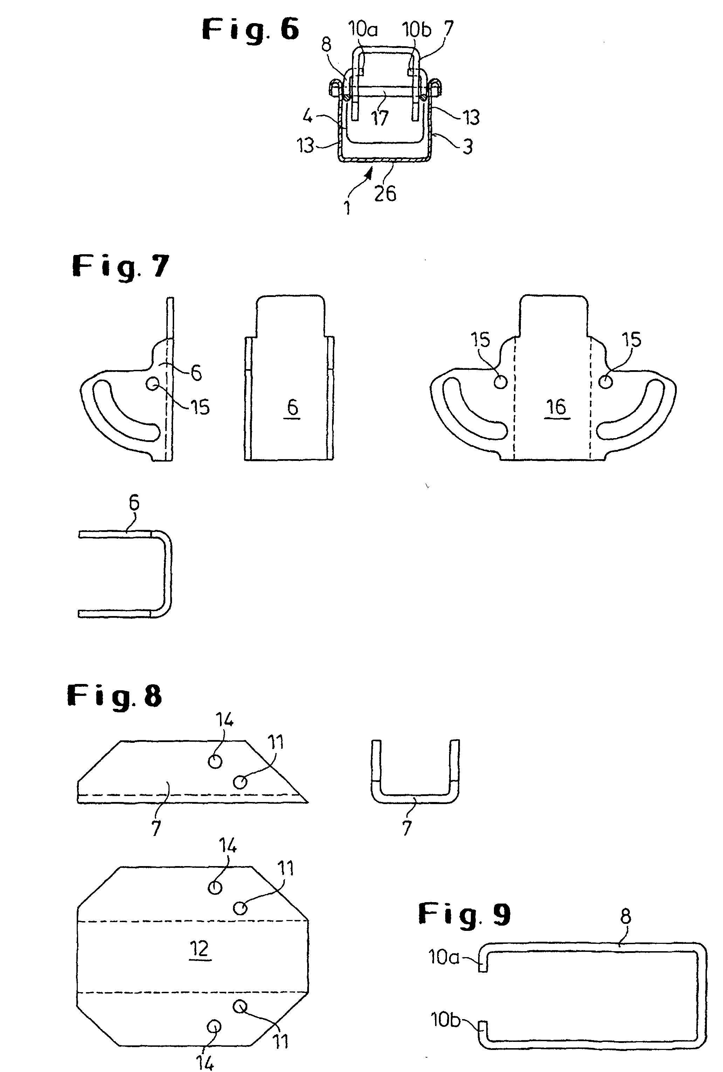

Die Laufbahn 1 besteht aus einem U-förmigen Leistenprofil 3 (vgl. Figur 6) und ist mit zahlreichen Rollen 4 bestückt, deren Oberkanten die Laufbahnebene 5 definieren. Die Durchlaufsperre 2 ist als integrierter Bestandteil der Laufbahn 1 im Hohlkammerraum der Laufbahnleiste 3 angeordnet und besteht aus einem Schwenkkulissensegment 6 und einem Rücklaufsperrglied 7, die beide einen U-förmigen Querschnitt besitzen und über ein als Drahtbügel 8 (vgl. auch Figur 9) ausgebildetes Kopplungsglied einerseits bewegungsabhängig miteinander verbunden sind, das andererseits aber in bestimmten Betriebzuständen auch eine Schwenkbewegung allein nur des Rücklaufsperrgliedes 7 bzw. allein nur des Schwenkkulissensegmentes 6 gestattet.

Zu diesem Zweck greift der Drahtbügel 8 mit seinem geschlossenen Ende in einen kurvenförmigen Schlitz 9 des Schwenkkulissensegmentes 6 ein, der entsprechend seiner Auslegung einen freien Lauf des Drahtbügels 8 bei Schwenkbewegungen des Rücklaufsperrgliedes 7 ermöglicht, ohne daß dabei das Schwenkkulissensegment 6 in seiner Lage verändert bzw. verschwenkt wird.

Der Drahtbügel 8 besitzt an seinem freien Ende abgewinkelte, einander zugewandte Stege 10a, 10b (vgl. die Figuren 6 und 9), die zur Verbindung mit dem Rücklaufsperrglied 7 von dessen Außenseiten her in Aufnahmebohrungen 11 (vgl. in Figur 8 den Zuschnitt 12) eingerastet sind. Sowohl das Schwenkkulissensegment 6 als auch das Rücklaufsperrglied 7 lagern deutlich oberhalb ihres Schwerpunktes auf durch die Seitenwände 13 der Laufbahnleisten 3 und Durchgangsbohrungen 14 des Rücklaufsperrgliedes 7 bzw. Durchgangsbohrungen 15 (vgl. in Figur 7 den Zuschnitt 16 und die dortige Seitenansicht) des Schwenkkulissensegmentes 6 gesteckten Achsen 17 (vgl. Figur 6), auf denen sie freibeweglich angeordnet sind. Das Schwenkkulissensegment 6 und das Rücklaufsperrglied 7 werden - wenn sie aus Blech bestehen - aus den in Figur 7 und 8 dargestellten Blechzuschnitten 16 bzw. 12 in einfacher Weise durch Abkanten um die in den Blechzuschnitten 12 bzw. 16 gestrichelten Abkantlinien hergestellt; nach ihrer Fertigstellung besitzen sie einen im wesentlichen U-förmigen Querschnitt.

Sobald von der Beschickungsseite I her eine auf die Rollen 4 der Laufbahnen 1 abgesetzte Lagereinheit 18 in gemäß Figur 2 Pfeilrichtung 19 abläuft, trifft die vordere Stirnseite 20 der Lagereinheit 18 auf das - im unbelasteten Zustand nach Figur 1 ebenso über die Laufbahnebene 5 wie das Rücklaufsperrglied 7 vorkragende - Schwenkkulissensegment 6, das daraufhin gemäß Figur 2 im Gegenuhrzeigersinn mit seiner Oberkante bis unter die Laufbahnebene 5 verschwenkt wird und dabei über den Drahtbügel 8 das Rücklaufsperrglied 7 im Uhrzeigersinn verschwenkend mitnimmt, so daß dieses ebenfalls unter die Laufbahnebene 5 wegtaucht und den Weg für die Lagereinheit 18 zur Entnahmeseite II hin freimacht. Während dieses gegensinnigen Verschwenkens von Schwenkkulissensegment 6 und Rücklaufsperrglied 7 verharrt der Drahtbügel 8 mit seinem geschlossenen Ende an der vorderen Anschlagkante 21 des Kulissenschlitzes 9. Die entlastete Durchlaufsperrre 2 stellt sich nach dem Passieren der Lagereinheit 18 in ihre in Figur 1 gezeigte Grund- bzw. Ausgangsstellung zurück.

Wenn die an der Entnahmeseite II kommissionierte Lagereinheit 18 anschließend wie in Figur 3 gezeigt in Gegenrichtung gemäß Pfeil 22 zur Beschickungsseite I zurückbewegt wird, schlägt deren hintere Stirnseite 23 an die ihr zugewandte Breitfläche des Rücklaufsperrgliedes 7 an und drückt dieses in der Folge unter die Laufbahnebene 5. Dem Drahtbügel 8 ist es dabei gestattet, sich mit seinem geschlossenen Ende von der vorderen Anschlagkante 21 frei in Richtung auf die hintere Anschlagkante 24 des Kulissenschlitzes 9 zu bewegen, d.h. das Schwenkkulissensegment 6 bleibt zunächst in seiner aufrechten Grundstellung. Erst wenn in der weiteren Bewegung die hintere Stirnseite 23 der Lagereinheit 18 auf die Breitwand des Schwenkkulissensegmentes 6 auftrifft, wird auch dieses unter die Laufbahnebene 5 verschwenkt, wie in Figur 4 gezeigt; der Drahtbügel verlagert sich dabei in dem Kulissenschlitz 9 bis nahezu an dessen hintere Anschlagkante 24.

Das im weiteren Bewegungsverlauf entlastete Rücklaufsperrglied 7 stellt sich beim Erreichen der für die Lagereinheit 18 in Figur 5 gezeigten Position durch eine selbsttätige Schwenkbewegung um die Achse 17 in die über die Laufbahnebene 5 vorragende Grundstellung zurück, wobei es sich mit einer an seiner unteren Seite ausgebildeten Anschlagkante 25 auf dem Boden 26 des Leistenprofils 3 abstützt und verhindert, daß sich die Lagereinheit 18 aus dieser Position wegbewegen kann, denn die Lagereinheit 18 liegt mit ihrer vorderen Stirnkante 20 an dem hochstehenden Rücklaufsperrglied 7 an und kann dieses nicht durchschwenken. Erst nachdem ein nicht gezeigtes Regalbediengerät die Lagereinheit 18 aus der Position gemäß Figur 5 entnommen hat, wird auch das Schwenkkulissensegment 6 entlastet und kann um die Achse 17 im Gegenuhrzeigersinn zurück in die Grundstellung gemäß Figur 1 verschwenken, in der das geschlossene Ende des Drahtbügels 8 dann wieder der vorderen Anschlagkante 21 des Kulissenschlitzes 9 anliegt. Mit einem neuen Beschickungsvorgang kann dann eine nächste Sequenz von Verschwenken zum freien Durchlauf und Zurückschwenken mit Sperre der Bewegung der Lagereinheit 18 eingeleitet werden.

## Patentansprüche

1. Durchlaufregal zum Kommissionieren von Lagereinheiten (18), insbesondere an einem Wechselplatz, mit vorzugsweise in mehreren Ebenen übereinander angeordneten und zur Kommissionierseite hin geneigten, im Abstand parallel zueinander verlaufenden Laufbahnen (1), auf denen die Lagereinheiten (18) unter Schwerkrafteinfluß von der Beschickungsseite (I) direkt in eine Entnahmeposition (II) gelangen, und mindestens einer den Laufbahnen (1) zugeordneten richtungsabhängigen, um eine ortsfeste Drehachse (17) in gegensinnigen Richtungen verschwenkbaren Durchlaufsperre (2), durch die eine Lagereinheit (18) in einer der Entnahmeposition in Bewegungsrichtung vorgelagerten Position festlegbar ist, wobei die Durchlaufsperre (2) als integrierter Bestandteil der Laufbahn (1) in deren im Querschnitt im wesentlichen U-förmigen Laufbahnleiste (3) angeordnet ist und aus einem Schwenkkulissensegment (6) sowie einem Rücklaufsperrglied (7) besteht, die über ein Kopplungsglied (8) miteinander verbunden sind,
**dadurch gekennzeichnet,**
**daß** das Kopplungsglied als ein Drahtbügel (8) ausgebildet ist, der mit an seinem freien Ende abgewinkelten, einander zugewandten Stegen (10a, 10b) beidseitig in das Rücklaufsperrglied (7) einrastet und mit seinem geschlossenen Bügelende in einem kurvenförmigen Schlitz (9) des Schwenkkulissensegmentes (7) geführt ist.

2. Durchlaufregal nach Anspruch 1,
**dadurch gekennzeichnet,**
**daß** das Schwenkkulissensegment (6) und das Rücklaufsperrglied (7) jeweils oberhalb ihres Schwerpunktes auf durch die Seitenwände (13) der Laufbahnleisten (3) gesteckten Achsen (7) freibeweglich gelagert sind und im unbelasteten Zustand über die Laufbahnebene (5) vorkragen.

3. Durchlaufregal nach Anspruch 1 oder 2,
**dadurch gekennzeichnet,**
**daß** das Schwenkkulissensegment (6) und das Rücklaufsperrglied (7) einen im wesentlichen U-förmigen Querschnitt besitzen.

4. Durchlaufregal nach einem der Ansprüche 1 bis 3,
**dadurch gekennzeichnet,**
**daß** das Rücklaufsperrglied (7) mit einer sich auf dem Leistenboden (26) abstützenden Anschlagkante (25) ausgebildet ist.

## Claims

1. A flow shelf for commissioning storage units (18), in particular, at an interchange, with tracks (1) that preferably are arranged on top of one another in several planes and slanted toward the commissioning side, wherein said tracks extend parallel to and are spaced apart from one another and serve for directly conveying the storage units (18) from the loading side (I) to the unloading position (II) under the influence of gravity, and with at least one directionally dependent blocking mechanism (2) that is assigned to the tracks (1) and can be pivoted in opposite directions about a stationary axis of rotation (17), wherein a storage unit (18) can be retained in a position that, viewed in the moving direction, is situated upstream of the unloading position by the blocking mechanism, and wherein the blocking mechanism (2) is arranged in the track profile (3) of essentially U-shaped cross section as an integral component of the track (1) and consists of a pivoted crank segment (6) and a return stop (7) that are connected to one another by means of a coupling element (8),
**characterized by** the fact
that the coupling element is realized in the form of a wire bow (8) that snaps into the return stop (7) on both sides with angled webs (10a, 10b) that are arranged on its free end and face one another, wherein the wire bow is guided in a curve-shaped slot (9) of the pivoted crank segment (7) with its closed bow end.

2. The flow shelf according to Claim 1,
**characterized by** the fact
that the pivoted crank segment (6) and the return stop (7) are respectively supported in a freely movable fashion above their center of gravity on axles (7) that extend through the side walls (13) of the track profiles (3), with the pivoted crank segment and the return stop protruding over the track plane (5) when they are not subjected to a load.

3. The flow shelf according to Claim 1 or 2,
**characterized by** the fact
that the pivoted crank segment (6) and the return stop (7) have an essentially U-shaped cross section.

4. The flow shelf according to one of Claims 1 - 3,
**characterized by** the fact
that the return stop (7) is realized with a buffer edge (25) that is supported on the profile bottom (26).

## Revendications

1. Casier de stockage dynamique pour la préparation de commandes d'unités de stockage (18), en particulier à un emplacement de changement, comportant de préférence des bandes circulantes (1) superposées en plusieurs plans, inclinées vers le côté de la préparation de commandes et écartées parallèlement les unes des autres, sur lesquelles les unités de stockage (18) arrivent, sous l'influence de la force de gravité, à partir du côté de chargement (I) directement en position de prélèvement (II) et comportant au moins un barrage dynamique (2) associé aux bandes circulantes (1) et dépendant de la direction pouvant pivoter autour d'un axe de rotation à emplacement fixe (17) dans des directions opposées, grâce auquel une unité de stockage (18) peut être fixée dans une position en amont de la position de prélèvement dans le sens du mouvement, le barrage dynamique (2) étant installé comme partie intégrante de la bande circulante (1) dans le couloir (3) de bande circulante globalement en forme de U dans sa section transversale et consistant en un segment à coulisse pivotant (6) ainsi qu'en un élément de barrage de marche arrière (7), qui sont reliés l'un à l'autre par l'intermédiaire d'un élément d'accouplement (8),
**caractérisé en ce que**
l'élément d'accouplement est configuré comme une bride en fil de fer (8) qui s'enclenche des deux côtés dans l'élément de barrage de marche arrière (7) grâce à des traverses (10a, 10b) coudées à son extrémité libre et tournées l'une vers l'autre et est guidée avec son extrémité de bride fermée dans une fente de forme courbe (9) du segment à coulisse pivotant (7).

2. Casier de stockage dynamique selon la revendication 1,
**caractérisé en ce que**
le segment à coulisse pivotant (6) et l'élément de barrage de marche arrière (7) sont installés respectivement de manière à pouvoir bouger librement au dessus de leur centre de gravité sur les axes (7) plantés à travers les parois latérales (13) des couloirs de bande circulante (3) et dépassent au dessus du plan de la bande circulante (5) quand elle n'est pas chargée.

3. Casier de stockage dynamique selon la revendication 1 ou 2,
**caractérisé en ce que**
le segment à coulisse pivotant (6) et l'élément de barrage de marche arrière (7) possèdent une section transversale globalement en forme de U.

4. Casier de stockage dynamique selon une des revendications 1 à 3,
**caractérisé en ce que**
l'élément de barrage de marche arrière (7) est configuré avec un rebord de butée (25) s'appuyant sur le fond du couloir (26).
